# EUROPÄISCHE PATENTSCHRIFT

(11) **EP 3 724 425 B1**
(45) Veröffentlichungstag und Bekanntmachung des Hinweises auf die Patenterteilung: **16.08.2023**
(21) Anmeldenummer: 17825773.9
(22) Anmeldetag: 11.12.2017
(51) Int. Cl.: E04H 12/08, E04H 12/34, F03D 13/20

(54) **VERFAHREN ZUM HERSTELLEN EINER TEILSEKTION EINER MEHRTEILIGEN TURMSEKTION EINES TURMS UND TEILSEKTION EINER MEHRTEILIGEN TURMSEKTION EINES TURMS**
METHOD FOR PRODUCING A PARTIAL SECTION OF A MULTIPART TOWER SECTION OF A TOWER AND PARTIAL SECTION OF A MULTIPART TOWER SECTION OF A TOWER
PROCÉDÉ DE FABRICATION D'UNE SECTION PARTIELLE D'UNE SECTION DE TOUR EN PLUSIEURS PARTIES D'UNE TOUR, ET SECTION PARTIELLE D'UNE SECTION DE TOUR EN PLUSIEURS PARTIES D'UNE TOUR

(43) Veröffentlichungstag der Anmeldung: 21.10.2020
(73) Patentinhaber: enovation GmbH, 18230 Ostseebad Rerik (DE)
(72) Erfinder: PORM, Karsten, 18236 Kröpelin (DE); BOCKHOLT, Stefan, 18255 Kühlungsborn (DE); AHRENS, Robin, 18057 Rostock (DE); HEIN, Robert, 18057 Rostock (DE)
(74) Vertreter: 2SPL Patentanwälte PartG mbB
(86) Internationale Anmeldenummer: PCT/EP2017/082281
(87) Internationale Veröffentlichungsnummer: WO 2019/114927

(56) Entgegenhaltungen:
- WO-A1-2015/161858
- CN-A- 106 762 444
- DE-A1-102015 110 344

## Beschreibung

### Technisches Gebiet

Ausführungsbeispiele befassen sich mit Konzepten für Türme mit großen Höhen und insbesondere mit Verfahren zum Herstellen einer Teilsektion einer mehrteiligen Turmsektion und Teilsektionen.

### Hintergrund

Die für einen wirtschaftlichen Betrieb von On-Shore Windenergieanlagen WEA benötigten großen Nabenhöhen (z.B. >130m), erfordern für die Türme dieser WEA's in Stahlbauweise große Turmfußdurchmesser. Die Transportrahmenbedingungen (z.B. Durchfahrtshöhen) an Land beschränken die maximal möglichen Durchmesser für Turmsektionen auf 4,4 m. Eine Möglichkeit stellen Turmsektionen in längsgeteilter Bauweise dar. Diese ermöglichen Turmfußdurchmesser größer 4,4 m ohne die bestehenden Rahmenbedingungen für den Transport zu überschreiten.

CN 106 762 444 A zeigt ein Verfahren zum Herstellen einer Teilsektion einer mehrteiligen Turmsektion und bildet den nächstliegenden Stand der Technik für die Ansprüche 1 und 9.

DE 10 2015 110344 A1 zeigt eine mehrteilige Turmsektion und stellt den nächstliegenden Stand der Technik für Anspruch 10 dar.

### Zusammenfassung

Es besteht ein Bedarf ein Konzept für die Herstellung von Teilsektionen von mehrteiligen Turmsektionen von Türmen zu schaffen, dass eine kostengünstigere, einfachere, schnellere und/oder formgenauere Herstellung von Teilsektionen ermöglicht.

Dieser Bedarf könnte durch den Gegenstand einer der vorliegenden Ansprüche gedeckt werden.

Einige Ausführungsbeispiele beziehen sich auf ein Verfahren zum Herstellen einer Teilsektion einer mehrteiligen Turmsektion eines Turms. Das Verfahren umfasst ein Trennen einer Schale der mehrteiligen Turmsektion entlang eines ersten Abschnitts einer gewünschten Längstrennlinie der Schale und ein Befestigen eines ersten Längsflanschteils eines Längsflansches einer ersten Teilsektion der mehrteiligen Turmsektion an einem der ersten Teilsektion zugehörigen Schalensegment der Schale entlang des ersten Abschnitts der gewünschten Längstrennlinie nach dem Trennen der Schale entlang des ersten Abschnitts der gewünschten Längstrennlinie. Ferner umfasst das Verfahren ein Trennen der Schale entlang eines zweiten Abschnitts der gewünschten Längstrennlinie während oder nach dem Befestigen des ersten Längsflanschteils des Längsflansches der ersten Teilsektion.

Einige weitere Ausführungsbeispiele beziehen sich auf ein Verfahren zum Herstellen einer Teilsektion einer mehrteiligen Turmsektion eines Turms. Das Verfahren umfasst ein Befestigen von Hilfsbrückenstrukturen an einer Außenseite einer Schale der mehrteiligen Turmsektion. Jede Hilfsbrückenstruktur umfasst einen ersten Befestigungsabschnitt, der an einem Schalensegment einer ersten Teilsektion der mehrteiligen Turmsektion befestigt wird, und einen zweiten Befestigungsabschnitt, der an einem Schalensegment einer zweiten Teilsektion der mehrteiligen Turmsektion befestigt wird, sodass die Hilfsbrückenstruktur eine gewünschte Längstrennlinie der Schale zwischen dem Schalensegment der ersten Teilsektion und dem Schalensegment der zweiten Teilsektion überbrückt. Ferner umfasst das Verfahren ein Trennen der Schale entlang der gewünschten Längstrennlinie nach dem Befestigen der Hilfsbrückenstrukturen.

Einige Ausführungsbeispiele beziehen sich auf eine mehrteilige Turmsektion eines Turms. Die mehrteilige Turmsektion umfasst eine erste Teilsektion, die ein erstes Schalensegment einer Schale der mehrteiligen Turmsektion und einen ersten an dem ersten Schalensegment befestigten Längsflanschteil eines Längsflansches der ersten Teilsektion umfasst. Ferner umfasst die mehrteilige Turmsektion eine zweite Teilsektion, die ein zweites Schalensegment der Schale und einen ersten an dem zweiten Schalensegment befestigten Längsflanschteil eines Längsflansches der zweiten Teilsektion umfasst. Der erste Längsflanschteil des Längsflansches der ersten Teilsektion ist mit dem ersten Längsflanschteil des Längsflansches der zweiten Teilsektion verbunden, sodass eine erste Kontaktfläche des ersten Längsflanschteils des Längsflansches der ersten Teilsektion mit einer ersten Kontaktfläche des ersten Längsflanschteils des Längsflansches der zweiten Teilsektion in Kontakt ist. Ferner weist der erste Längsflanschteil des Längsflansches der ersten Teilsektion eine zweite, ebene Kontaktfläche auf, die einen ersten Abschnitt und einen zweiten Abschnitt umfasst. Der erste Abschnitt der zweiten Kontaktfläche erstreckt sich von einem Rand des ersten Schalensegments bis zu einer Schweißnaht zwischen dem ersten Längsflanschteil des Längsflansches der ersten Teilsektion und dem ersten Schalensegment. Ferner erstreckt sich der zweite Abschnitt der zweiten Kontaktfläche von dem Rand des ersten Schalensegments in Richtung des ersten Längsflanschteils des Längsflansches der zweiten Teilsektion.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
Fig. 1 ein Flussdiagramm eines Verfahrens zum Herstellen einer Teilsektion einer mehrteiligen Turmsektion eines Turms;
Fig. 2a-2e schematische Querschnitte einer mehrteiligen Turmsektion während der Herstellung;
Fig. 3a einen schematischen Querschnitt eines Teils einer mehrteiligen Turmsektion;
Fig. 3b einen schematischen Querschnitt eines Teils einer weiteren mehrteiligen Turmsektion;
Fig. 4a ein Flussdiagramm eines Verfahrens zum Herstellen einer Teilsektion einer mehrteiligen Turmsektion eines Turms;
Fig. 4b einen schematischen Querschnitt einer Hilfsbrückenstruktur;
Fig. 4c einen schematischen Querschnitt einer weiteren Hilfsbrückenstruktur; und
Fig. 5 einen schematischen Querschnitt einer Windenergieanlage.

### Beschreibung

Verschiedene Beispiele werden nun ausführlicher Bezug nehmend auf die beiliegenden Figuren beschrieben, in denen einige Beispiele dargestellt sind. In den Figuren können die Stärken von Linien, Schichten und/oder Bereichen zur Verdeutlichung übertrieben sein. Während sich weitere Beispiele für verschiedene Modifikationen und alternative Formen eignen, sind dementsprechend einige bestimmte Beispiele derselben in den Figuren gezeigt und werden nachfolgend ausführlich beschrieben. Allerdings beschränkt diese detaillierte Beschreibung weitere Beispiele nicht auf die beschriebenen bestimmten Formen. Gleiche Bezugszeichen beziehen sich in der gesamten Beschreibung der Figuren auf gleiche oder ähnliche Elemente, die bei einem Vergleich miteinander identisch oder in modifizierter Form implementiert sein können, während sie die gleiche oder eine ähnliche Funktion bereitstellen.

Es versteht sich, dass, wenn ein Element als mit einem anderen Element "verbunden" oder "gekoppelt" bezeichnet wird, die Elemente direkt, oder über ein oder mehrere Zwischenelemente, verbunden oder gekoppelt sein können. Wenn zwei Elemente A und B unter Verwendung eines "oder" kombiniert werden, ist dies so zu verstehen, dass alle möglichen Kombinationen offenbart sind, d. h. nur A, nur B sowie A und B. Eine alternative Formulierung für die gleichen Kombinationen ist "zumindest eines von A und B". Das Gleiche gilt für Kombinationen von mehr als 2 Elementen.

Die Terminologie, die hier zum Beschreiben bestimmter Beispiele verwendet wird, soll nicht begrenzend für weitere Beispiele sein. Wenn eine Singularform, z. B. "ein, eine" und "der, die, das" verwendet wird und die Verwendung nur eines einzelnen Elements weder explizit noch implizit als verpflichtend definiert ist, können weitere Beispiele auch Pluralelemente verwenden, um die gleiche Funktion zu implementieren. Wenn eine Funktion nachfolgend als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei Gebrauch das Vorhandensein der angegebenen Merkmale, Ganzzahlen, Schritte, Operationen, Prozesse, Elemente, Komponenten und/oder einer Gruppe derselben präzisieren, aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Sofern nicht anderweitig definiert, werden alle Begriffe (einschließlich technischer und wissenschaftlicher Begriffe) hier in ihrer üblichen Bedeutung auf dem Gebiet verwendet, zu dem Beispiele gehören.

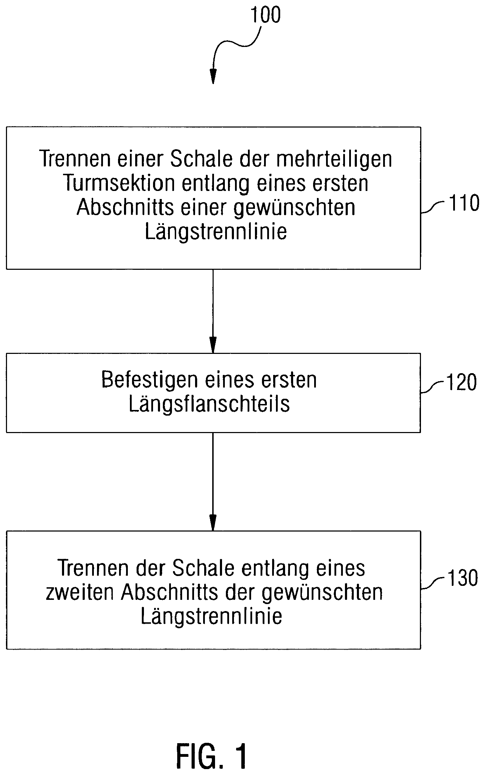

Fig. 1 zeigt ein Flussdiagramm eines Verfahrens zum Herstellen einer Teilsektion einer mehrteiligen Turmsektion eines Turms gemäß einem Ausführungsbeispiel. Das Verfahren 100 umfasst ein Trennen 110 einer Schale der mehrteiligen Turmsektion entlang eines ersten Abschnitts einer gewünschten Längstrennlinie der Schale und ein Befestigen 120 eines ersten Längsflanschteils eines Längsflansches einer ersten Teilsektion der mehrteiligen Turmsektion an einem der ersten Teilsektion zugehörigen Schalensegment der Schale entlang des ersten Abschnitts der gewünschten Längstrennlinie nach dem Trennen der Schale entlang des ersten Abschnitts der gewünschten Längstrennlinie. Ferner umfasst das Verfahren 100 ein Trennen 130 der Schale entlang eines zweiten Abschnitts der gewünschten Längstrennlinie während oder nach dem Befestigen 120 des ersten Längsflanschteils des Längsflansches der ersten Teilsektion.

Durch das Befestigen des Längsflanschteils während oder bevor die Schale in dem zweiten Abschnitt der gewünschten Längstrennlinie getrennt wird, also bevor die Schale entlang der gesamten gewünschten Längstrennlinie getrennt ist, können über den Längsflanschteil die Schalensegmente der beiden Teilsektion bereits wieder verbunden werden, sodass eine Änderung des Abstands der beiden Schalensegmente zueinander (z.B. aufeinander zu oder voneinander weg bewegen) vermindert oder verhindert werden kann. Dadurch kann beispielsweise die Formgenauigkeit verbessert werden. Ferner könnte die Herstellungszeit der Turmsektionen reduziert werden, insbesondere, wenn das Trennen im zweiten Abschnitt bereits durchgeführt wird, während der Längsflanschteil im ersten Abschnitt befestigt wird. Dadurch können auch beispielsweise die Herstellungskosten reduziert werden.

Das Trennen der Schale entlang der (ersten) gewünschten Längstrennlinie kann in mehreren Schritten erfolgen, bei denen jeweils ein Abschnitt der gewünschten Längstrennlinie getrennt wird, bis die Schale entlang der gesamten gewünschten Längstrennlinie getrennt ist. Dabei kann das Trennen der Schale in den verschiedenen Abschnitten der gewünschten Längstrennlinie direkt aufeinander folgend, also ohne Unterbrechung, erfolgen oder nach dem Trennen der Schale in einem Abschnitt eine Pause eingelegt werden (z.B. um einen Längsflanschteil in einem bereits getrennten Abschnitt zu befestigen) bevor mit dem nächsten Abschnitt fortgesetzt wird. Beispielsweise kann das Trennen 130 der Schale entlang des zweiten Abschnitts ohne Unterbrechung auf das Trennen 110 der Schale entlang des ersten Abschnitts erfolgen und das Befestigen 120 des ersten Längsflanschteils des Längsflansches der ersten Teilsektion kann während des Trennens 130 der Schale entlang des zweiten Abschnitts erfolgen. Die Abschnitte der gewünschten Längstrennlinie sind beispielsweise direkt aneinander anschließend, sodass das Trennen kontinuierlich fortgesetzt werden kann, während nach dem Trennen in einem Abschnitt jeweils ein Längsflanschteil in dem Abschnitt befestigt wird. Eine Länge der Abschnitte der gewünschten Längstrennlinie entspricht beispielsweise einer Länge der Längsflanschteile des Längsflansches.

Das Trennen der Schale umfasst zumindest das Trennen 110 der Schale entlang des ersten Abschnitts und das Trennen 130 der Schale entlang des zweiten Abschnitts, kann jedoch auch das Trennen in einem oder mehreren weiteren Abschnitten der gewünschten Längstrennlinie umfassen, bis die Schale entlang der gewünschten Längstrennlinie vollständig getrennt ist. Der erste Abschnitt der gewünschten Längstrennlinie und/oder der zweite Abschnitt der gewünschten Längstrennlinie kann jeweils länger als 1m (oder größer als 2m oder größer als 3m) und/oder kürzer als 10m (oder kleiner als 7m oder kleiner als 5m) sein. Die Schale kann während des Trennens entlang der gewünschten Trennlinie liegend angeordnet sein. Beispielsweise kann eine Längsachse der mehrteiligen Turmsektion während des Trennens der Schale im Wesentlichen horizontal liegen (z.B. Winkel zwischen einer horizontalen Richtung und der Längsachse der mehrteiligen Turmsektion kleiner als 10° oder kleiner als 5° oder kleiner als 2°).

Das Trennen der Schale kann von einer Innenseite der Schale erfolgen. Beispielsweise kann die Schale liegend angeordnet sein, sodass die gewünschte Trennlinie zwischen einer 4-Uhr-Lage und einer 8-Uhr-Lage angeordnet ist. Beispielsweise kann die Schale vor dem Trennen rotiert werden, sodass die gewünschte Trennlinie nahe der oder in 6-Uhr-Lage oder an einem tiefsten Punkt der Schale positioniert ist. Dadurch kann das Trennen von der Innenseite einfach und/oder mit großer Genauigkeit erfolgen. Beispielsweise kann eine Trennvorrichtung (z.B. ein Brenner, wie beispielsweise ein Autogenbrenner oder ein Plasmabrenner, eine Säge oder eine Fräse) auf eine Innenseite der Schale aufgesetzt werden. Die Trennvorrichtung kann beispielsweise auf Rollen oder Rädern fahrbar sein und auf der Innenseite der Schale zum Trennen an der gewünschten Längstrennlinie entlang fahren. Alternativ kann eine Führung (z.B. eine Schiene) für die Trennvorrichtung auf der Innenseite der Schale befestigt werden und die Trennvorrichtung während des Trennens entlang der gewünschten Trennlinie mit der Führung gekoppelt sein. Das Trennen der Schale kann entlang der gewünschten Trennlinie durch die Trennvorrichtung erfolgen. Beispielsweise kann das Trennen entlang der gewünschten Trennlinie durch einen Brenn- oder Schmelzschnitt (z.B. durch einen Brenner) erfolgen. Dadurch könnte die Schale schnell und/oder kostengünstig getrennt werden. Alternativ kann das Trennen der Schale von einer Außenseite der Schale erfolgen.

Beispielsweise weist der Längsflansch der ersten Teilsektion zwei oder mehr Längsflanschteile auf, die nacheinander mit dem Schalensegment der ersten Teilsektion verbunden werden, nachdem der jeweilige Abschnitt der gewünschten Längstrennlinie getrennt wurde. Der erste Längsflanschteil des Längsflansches der ersten Teilsektion kann durch eine oder mehrere Schweißnähte an dem Schalensegment der ersten Teilsektion befestigt werden. Beispielsweise kann das Verfahren 100 ferner ein Befestigen (z.B. durch Schweißen) eines zweiten Längsflanschteils des Längsflansches der ersten Teilsektion an dem der ersten Teilsektion zugehörigen Schalensegment entlang des zweiten Abschnitts der gewünschten Längstrennlinie nach dem Trennen 130 der Schale entlang des zweiten Abschnitts der gewünschten Längstrennlinie umfassen. Ferner kann das Verfahren 100 ein Trennen der Schale entlang eines dritten Abschnitts der gewünschten Längstrennlinie während oder nach dem Befestigen des zweiten Längsflanschteils des Längsflansches der ersten Teilsektion umfassen. Zusätzlich kann das Verfahren 100 ein Verbinden (z.B. durch Schweißen) eines Endes des ersten Längsflanschteils des Längsflansches der ersten Teilsektion mit einem Ende des zweiten Längsflanschteils des Längsflansches der ersten Teilsektion nach dem Befestigen des zweiten Längsflanschteils des Längsflansches der ersten Teilsektion an dem Schalensegment der ersten Teilsektion aufweisen.

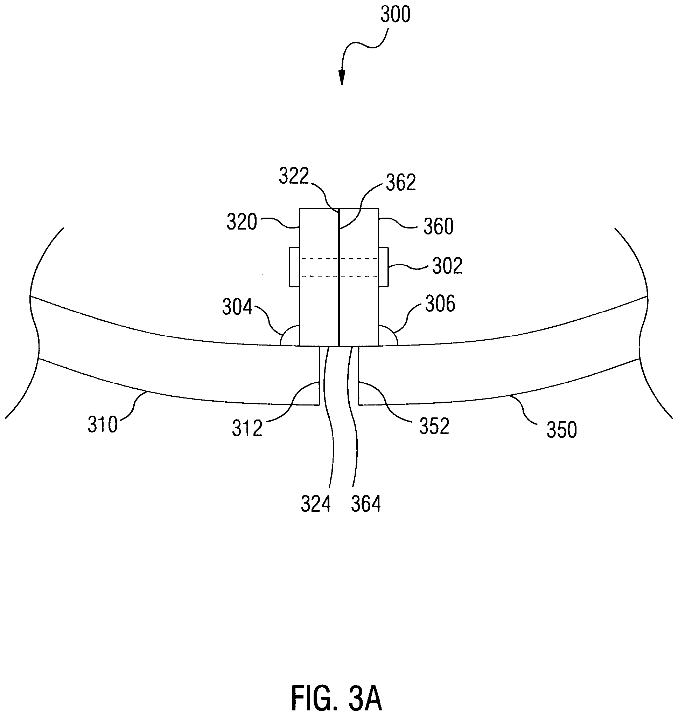

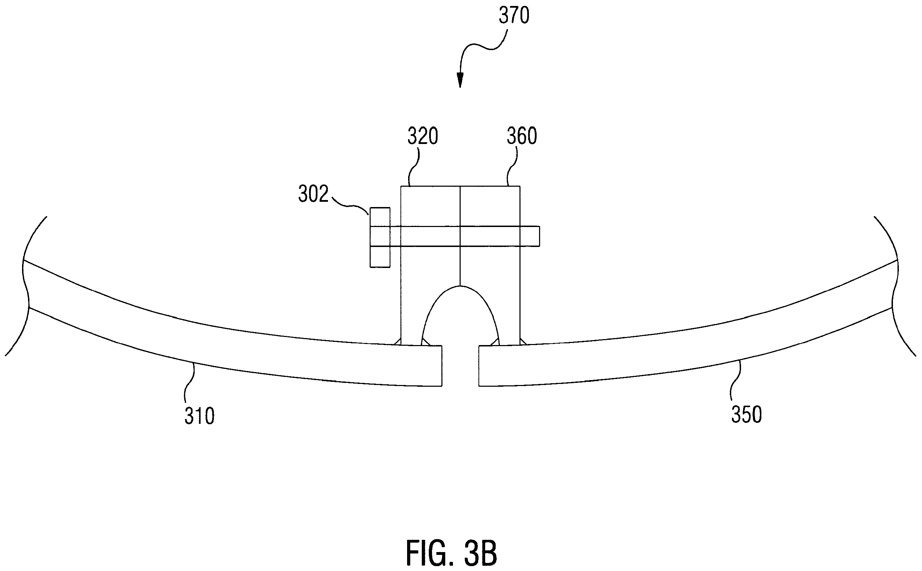

Das Verfahren 100 kann ferner ein Befestigen (z.B. durch Schweißen) eines ersten Längsflanschteils eines Längsflansches einer zweiten Teilsektion der mehrteiligen Turmsektion an einem der zweiten Teilsektion zugehörigen Schalensegment der Schale entlang des ersten Abschnitts der gewünschten Längstrennlinie nach dem Trennen 110 der Schale entlang des ersten Abschnitts der gewünschten Längstrennlinie umfassen. Ferner kann das Verfahren 100 ein Verbinden (z.B. durch eine Schraubverbindung) des ersten Längsflanschteils des Längsflansches der ersten Teilsektion mit dem ersten Längsflanschteil des Längsflansches der zweiten Teilsektion umfassen, bevor die Schale entlang der gesamten gewünschten Längstrennlinie getrennt ist (z.B. Fig. 3a oder 3b). Das Verbinden des ersten Längsflanschteils des Längsflansches der ersten Teilsektion mit dem ersten Längsflanschteil des Längsflansches der zweiten Teilsektion kann beispielsweise bereits vor dem Befestigen des ersten Längsflanschteils des Längsflansches der ersten Teilsektion mit dem Schalensegment der ersten Teilsektion, nach dem Befestigen des ersten Längsflanschteils des Längsflansches der ersten Teilsektion und vor dem Befestigen des ersten Längsflanschteils des Längsflansches der zweiten Teilsektion mit dem Schalensegment der zweiten Teilsektion, oder nach dem Befestigen des ersten Längsflanschteils des Längsflansches der zweiten Teilsektion mit dem Schalensegment der zweiten Teilsektion erfolgen.

Erfindungsgemäß umfasst das Verfahren 100 ein Befestigen von (ersten) Hilfsbrückenstrukturen (z.B. Knaggen, Stahlbrücken oder Aluminiumbrücken) an einer Außenseite der Schale vor dem Trennen 110 der Schale entlang des ersten Abschnitts der gewünschten Längstrennlinie. Jede Hilfsbrückenstruktur kann einen ersten Befestigungsabschnitt aufweisen, der an dem Schalensegment der ersten Teilsektion befestigt wird, und einen zweiten Befestigungsabschnitt aufweisen, der an einem Schalensegment der zweiten Teilsektion befestigt wird, sodass die Hilfsbrückenstruktur die gewünschte Längstrennlinie überbrückt. Die Hilfsbrückenstrukturen können beispielsweise durch Schweißen (z.B. umlaufende Kehlnaht) oder durch Schraubverbindungen mit an der Schale befestigten Bolzen (z.B. angeschweißt) an der Schale befestigt werden.

Ferner kann das Verfahren 100 ein Rotieren der Schale nach dem Befestigen der Hilfsbrückenstrukturen und vor dem Trennen 110 der Schale entlang des ersten Abschnitts der gewünschten Längstrennlinie umfassen, sodass die gewünschte Längstrennlinie zu einer Lage zwischen 4 Uhr und 8 Uhr wechselt. Beispielsweise können die Hilfsbrückenstrukturen befestigt werden, während die gewünschte Längstrennlinie in einer Lage zwischen 10 Uhr und 2 Uhr ist. Dadurch kann ermöglicht werden, dass die Hilfsbrückenstrukturen oben auf der Schale von außen befestigt werden können und danach unten an der Schale, von Innen, die Schale getrennt werden kann. Dabei stellt beispielweise eine 12-Uhr-Lage einen höchsten Punkt an der Innen- oder Außenseite der Schale und eine 6-Uhr-Lage einen tiefsten Punkt an der Innen- oder Außenseite der Schale dar. Alternativ können die Hilfsbrückenstrukturen befestigt werden, während die gewünschte Längstrennlinie in einer Lage zwischen 4 Uhr und 5 Uhr oder zwischen 7 Uhr und 8 Uhr ist. Dadurch könnte beim Befestigen der Hilfsbrückenstrukturen beispielsweise auf eine Bühne verzichtet werden.

Zum Rotieren kann die Schale beispielsweise auf Rollen gelagert sein. Benachbarte Rollen können dabei einen Abstand voneinander aufweisen, der größer ist als eine Längsausdehnung der Hilfsbrückenstrukturen, sodass sich eine oder mehrere der Hilfsbrückenstrukturen während des Rotierens der Schale zwischen den benachbarten Rollen hindurchbewegen können.

Das Verfahren 100 kann ein Trennen der Schale entlang eines ersten Abschnitts einer zweiten gewünschten Längstrennlinie der Schale umfassen. Ferner kann das Verfahren 100 ein Befestigen eines ersten Längsflanschteils eines zweiten Längsflansches der ersten Teilsektion an dem der ersten Teilsektion zugehörigen Schalensegment der Schale entlang des ersten Abschnitts der zweiten gewünschten Längstrennlinie nach dem Trennen der Schale entlang des ersten Abschnitts der zweiten gewünschten Längstrennlinie aufweisen. Zusätzlich kann das Verfahren 100 ein Trennen der Schale entlang eines zweiten Abschnitts der zweiten gewünschten Längstrennlinie während oder nach dem Befestigen des ersten Längsflanschteils des zweiten Längsflansches der ersten Teilsektion umfassen.

Optional kann das Verfahren 100 ferner ein Befestigen von zweiten Hilfsbrückenstrukturen an der Außenseite der Schale während des Trennens entlang der ersten gewünschten Trennlinie umfassen, sodass die zweiten Hilfsbrückenstrukturen die zweite gewünschte Längstrennlinie überbrücken. Dadurch kann beispielsweise während noch an der ersten gewünschten Trennlinie von der Innenseite getrennt wird bereits das Trennen entlang der zweiten gewünschten Trennlinie durch das Anbringen der zweiten Hilfsbrückenstrukturen vorbereitet werden. Dadurch könnte die Herstellungszeit verkürzt werden.

Der zu errichtende Turm umfasst beispielsweise eine Mehrzahl von Turmsektionen von denen zumindest eine Turmsektion oder zumindest zwei übereinander anzuordnende Turmsektionen mehrteilig sind. Eine Turmsektion ist beispielsweise ein Teil eines Turms, der einen Höhenabschnitt des Turms bildet. Eine Turmsektion ist z.B. ein Teil eines Turms, der eine Symmetrie bezüglicher einer im errichteten Zustand des Turms im Wesentlichen vertikalen Längsachse des Turms aufweist. Beispielsweise kann die Turmsektion (z.B. die Schale der Turmsektion) eine zylindermantelförmige oder kegelstumpfmantelförmige Geometrie aufweisen. Die Längsachse der Turmsektion oder des Turms kann beispielsweise eine Symmetrieachse der Schale der Turmsektion oder des Turms sein.

Die mehrteilige Turmsektion des zu errichtenden Turms weist zumindest zwei Teilsektionen auf. Ferner umfasst die mehrteilige Turmsektion beispielsweise weniger als 9 oder weniger als 5 Teilsektionen. Beispielsweise kann ein Durchmesser der mehrteiligen Turmsektion größer als 4m (oder größer als 5m, größer als 6m oder größer als 8m) sein.

Die Schale der mehrteiligen Turmsektion kann beispielsweise zylindermantelförmig oder kegelstumpfmantelförmig sein und/oder eine Stahlschale oder Stahlblechschale sein. Die gewünschte Längstrennlinie der Schale kann sich von einer oberen Querkante der Schale bis zu einer unteren Querkante der Schale erstrecken. Beispielsweise ist die gewünschte Längstrennlinie eine Gerade (z.B. kürzeste Gerade zwischen gegenüberliegenden Rändern der Schale und/oder orthogonal zu einem Rand der Schale).

Die Teilsektionen der mehrteiligen Turmsektion werden beispielsweise bei der Trennung der Schale der Turmsektion in kleinere Teile erzeugt. Beispielsweise umfasst jede Teilsektion ein Segment der Schale der Turmsektion. Die Schalensegmente sind beispielsweise kegelstumpfmantelsegmentförmig (Geometrie eines Teils einer Mantelfläche eines Kegelstumpfes) oder zylindermantelsegmentförmig (Geometrie eines Teils einer Mantelfläche eines Zylinders). Ferner sind die Schalensegmente der Teilsektion z.B. Stahlschalensegmente.

Das Schalensegment der Teilsektion umfasst beispielsweise zwei sich im Wesentlichen horizontal (oder orthogonal zu einer Turmachse oder Symmetrieachse der Turmsektion) erstreckende Querseiten oder Querkanten und zwei sich im Wesentlich orthogonal zu den Querseiten (z.B. im Wesentlichen vertikal oder in Richtung der Turmachse) erstreckende Längsseiten oder Längskanten. Die Längsseiten können z.B. für hohlzylinderförmige Turmsektionen im Wesentlichen parallel zu der Längsachse des Turms oder der Turmsektion sein oder von der parallelen Richtung für hohlkegelstumpfförmige Turmsektionen leicht abweichen (z.B. weniger als 5°, weniger als 3° oder weniger als 1°). Das Schalensegment der Teilsektion ist beispielsweise Teil der Außenschale des Turms und kann z.B. aus Stahl gefertigt sein. Eine Querkante der Teilsektion und/oder eine Querkante des Schalensegments der Teilsektion kann beispielsweise eine Länge von mehr als 2,5 m (oder mehr als 5 m oder mehr als 8 m) aufweisen. Die Querkante entspricht beispielsweise der kreisbogenförmigen Kante am oberen oder unteren Ende einer Teilsektion und/oder am oberen oder unteren Ende des Schalensegments einer Teilsektion und die Länge der Querkante entspricht z.B. einer Länge der kreisbogenförmigen Kante. Die Längskante des Schalensegments der Teilsektion kann z.B. eine Länge von mehr als 5 m (oder mehr als 10 m oder mehr als 20 m) aufweisen. Entsprechend kann beispielsweise die Teilsektion eine Höhe von mehr als 5m (oder mehr als 10 m oder mehr als 20 m) aufweisen. Das Schalensegment der Teilsektion kann beispielsweise eine Dicke von mehr als 20 mm (oder mehr als 30 mm oder mehr als 40 mm) aufweisen.

Die Teilsektion umfasst beispielsweise einen Längsflansch entlang jeder der beiden Längskanten des Schalensegments der Teilsektion. Die Längsflansche sind beispielsweise entlang der Längskanten, z.B. angrenzend an die Längskanten, befestigt (z.B. durch zumindest eine Schweißnaht). Die Längsflansche können an einer Außenseite oder an einer Innenseite des Schalensegments der Teilsektion befestigt sein.

Beispielsweise können sich die Längsflansche der Teilsektion über die gesamten Längskanten der Schalensegmente der Teilsektion erstrecken. Alternativ kann ein Längsflansch kürzer als die Längskante eines Schalensegments sein, sodass sich zumindest an den Enden der Längskante kein Längsflansch erstreckt (z.B. entlang zumindest der letzten 10 cm, zumindest der letzten 30 cm oder zumindest der letzten 50 cm). Dadurch kann z.B. die Befestigung eines Querflansches entlang einer Querkante des Schalensegments der Teilsektionen erleichtert werden.

Die Teilsektion umfasst beispielsweise jeweils einen Querflansch entlang der beiden Querkanten des Schalensegments der Teilsektion. Die Querflansche entsprechen beispielsweise jeweils einem Ringflanschteil eines oberen und eines unteren Ringflansches. Die Querflansche sind beispielsweise kreissegmentförmig und entlang der Querkanten des Schalensegments der Teilsektion befestigt. Beispielsweise kann an einer oberen Querkante des Schalensegments ein oberer Querflansch und an einer unteren Querkante des Schalensegments ein unterer Querflansch befestigt sein. Der Querflansch kann verwendet werden, um die Teilsektion mit einer anderen Turmsektion, einer Teilsektion einer anderen Turmsektion oder einem Fundament des Turms zu verbinden (z.B. über Schraubverbindungen).

Als Turm wird z.B. ein vertikal ausgerichtetes Bauwerk bezeichnet, beispielsweise für eine Windenergieanlage. Die Definition eines Turms enthält sowohl abgespannte als auch freistehende Konstruktionen und berücksichtigt somit auch Konstruktionen, die manchmal auch als Mast bezeichnet werden. Beispielsweise kann der Turm ein Turm einer Windenergieanlage sein.

Durch das beschriebene Verfahren können beispielsweise Sektionen für Türme von Windenergieanlagen getrennt werden. Z.B. kann eine Vereinfachung im Vergleich zu einem Trennvorgang mittels Säge und zuvor aufgeschweißten Längsflanschen erreicht werden. Beispielsweise erfolgt das Trennen vor dem Aufsetzen der Längsflansche, das Trennen erfolgt unten im Turm und nicht oben auf dem Turm, das Trennen erfolgt mittels Brenn- oder Schmelzschnitt und während des Trennens kann bereits mit dem Einschweißen der Längsflansche begonnen werden.

Durch den thermischen Trennschnitt könnten deutliche Einsparungen bei der Gerätetechnik erzielt werden. Durch das gleichzeitige Einschweißen der Längsflansche können getrennte Bereich der Turmsektion klein (Formstabilität hoch) bleiben. Unterstützt durch die Knaggen bzw. Alubrücken auf der Außenseite können mögliche Verformungen minimiert werden. Dadurch könnte die gleiche oder eine ähnliche Längsflanschkonstruktion, wie beim Sägen, verwendet werden.

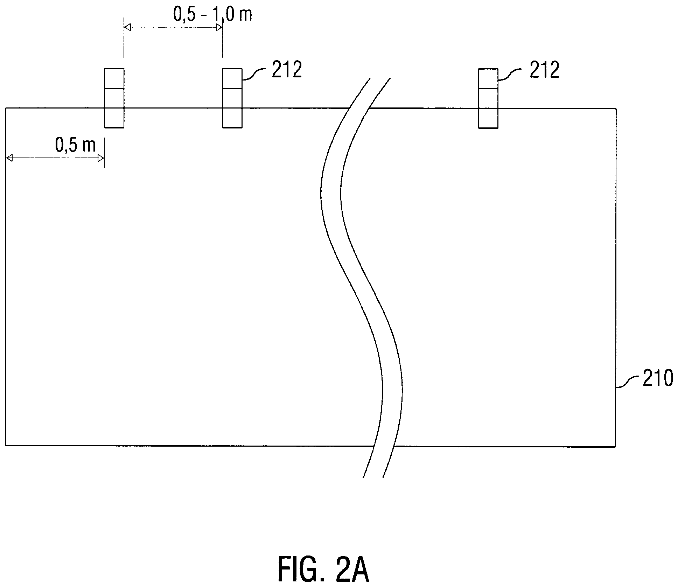

Fig. 2a-2e zeigen schematische Querschnitte einer mehrteiligen Turmsektion während der Herstellung entsprechend einem Ausführungsbeispiel. Beispielsweise wird zur Herstellung einer mehrteiligen Turmsektion 210 eine kegelstumpfmantelförmige oder zylindermantelförmige Schale erzeugt und auf der Außenseite über die spätere Trennlinie Hilfsbrückenstrukturen 212 (z.B. Knaggen oder Alubrücken) aufgesetzt. Z.B. werden Knaggen aufgeschweißt oder Alubrücken montiert, wie es in Fig. 2a gezeigt ist. Knaggen können z.B. mittels vollständig oder teilweise umlaufender Kehlnaht (z.B. a=5-7 mm) angeschweißt werden und Alubrücken können über aufgeschweißte Bolzen an der Außenhaut montiert werden. Beide Varianten können die Formstabilität beim späteren Trennen der Turmbleche unterstützen. Die Knaggen/Alubrücken können beispielsweise mit einem Abstand größer als 20cm und kleiner als 100cm (z.B. 50 cm) von einem Rand oder Querkante der Schale 210 und mit einem Abstand von mehr als 20cm (z.B. 50cm) und weniger als 2m (z.B. 1m) voneinander entfernt an der Schale befestigt werden.

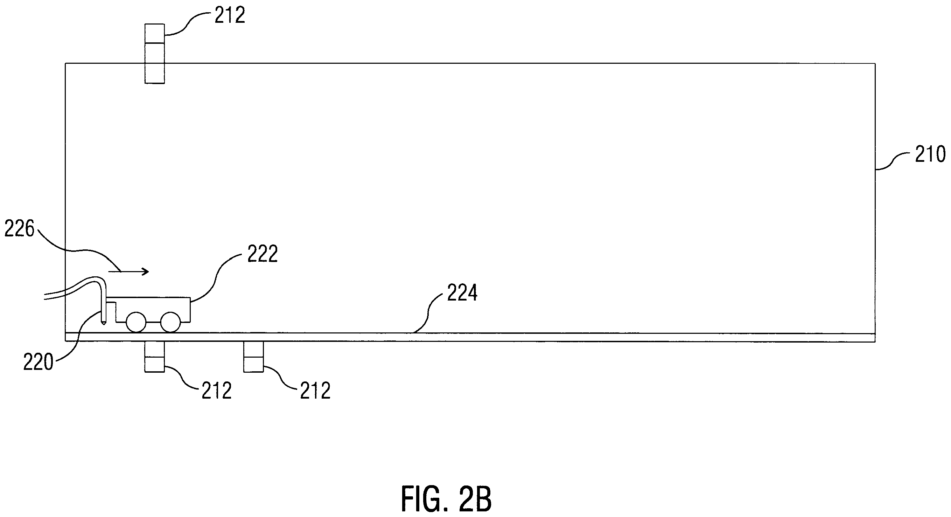

Danach kann die Sektion um 180° gedreht werden und mit einem Brennschnitt begonnen werden. Dazu kann eine Verfahreinheit oder ein Fahrwagen 222 einer Trennvorrichtung (z.B. selbstfahrend oder schienengebunden) auf die Innenseite der Schale aufgesetzt und ausgerichtet werden. Die Verfahreinheit hält einen Brenner 220 (z.B. Autogen oder Plasma) und kann beispielsweise mit einer Schiene 224 gekoppelt sein und einen gewünschten Brennervorschub 226 (z.B. Geschwindigkeit) während des Trennvorgangs halten, wie es in Fig. 2b gezeigt ist. Optional können zeitgleich mit dem Trennen im Inneren der Schale Hilfsbrückenstrukturen (z.B. Knaggen) an der Oberseite von außen angeschweißt werden.

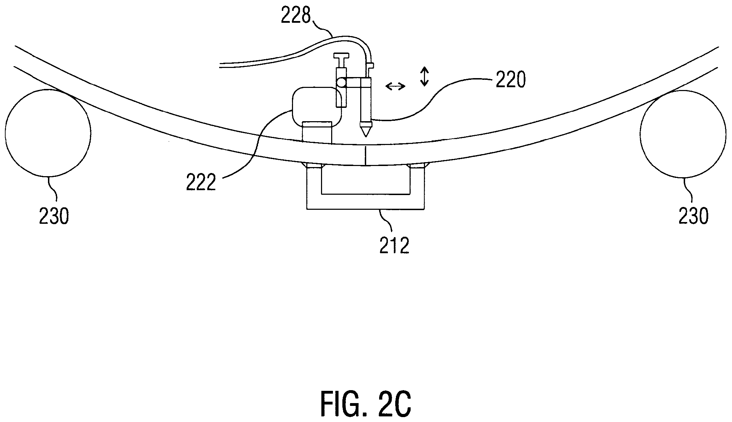

Fig. 2c zeigt eine schematische Darstellung eines Beispiels einer Trennvorrichtung, die eine Verfahreinheit 222 (z.B. schienengebunden oder selbstfahren) mit Brennerhalterung aufweist. Alternativ kann die Trennvorrichtung auch per Hand ohne Verfahreinheit geführt werden. Der Brenner 220 in der Brennerhalterung ist mit einer Zuleitung 228 verbunden und kann einen Autogen-Brennschnitt oder einen Plasma-Trennschnitt durchführen. Ferner sind in Fig. 2c Rollen 230 angedeutet, auf denen die Turmsektion während zumindest des Trennens gelagert sein kann und über die die Schale rotiert werden kann.

In Vorbereitung des Befestigens der Längsflanschteile können jeweils ein Längsflanschteil des Längsflansches der ersten Teilsektion und ein Längsflanschteil des Längsflansches der zweiten Teilsektion miteinander verbunden werden (z.B. über Bolzen). Durch das vorherige Verbinden über Bolzen kann eine Verschiebung der Längsflanschteile zueinander während des Befestigen an der Schale verhindert werden. Alternativ können die Längsflanschteile der Teilsektion aber auch zuerst mit der Schale verbunden werden und danach über beispielsweise Schraubverbindungen miteinander verbunden werden bevor die Schale entlang der gesamten gewünschten Trennlinie getrennt ist.

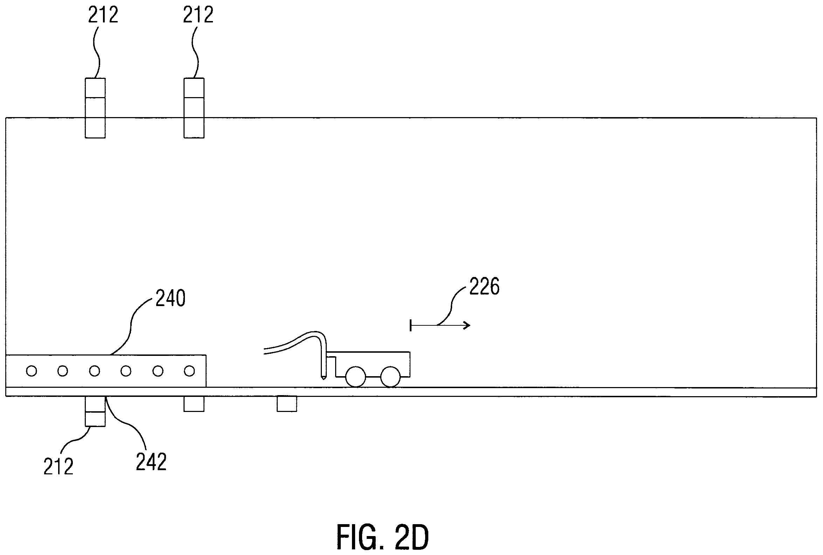

Nach einer gewissen Schnittlänge (z.B. 3-7 m) kann mit dem Aufsetzen und Anschweißen der mit Bolzen verbundenen Längsflanschteile 240 begonnen werden. Der Trennprozess kann während dessen fortgeführt (z.B. Schnittgeschwindigkeit und Schweißgeschwindigkeit annährend gleich) oder auch unterbrochen werden. Die Längsflanschteile 240 können über einen Kehlnahtanschluss 242 zwischen Längsflansch und Turmwand eingeschweißt werden und der Brennschnitt kann fortgesetzt werden, wie es in Fig. 2d gezeigt ist. Dies kann wiederholt werden bis die Sektion getrennt und die Längsflansche komplett eingeschweißt sind.

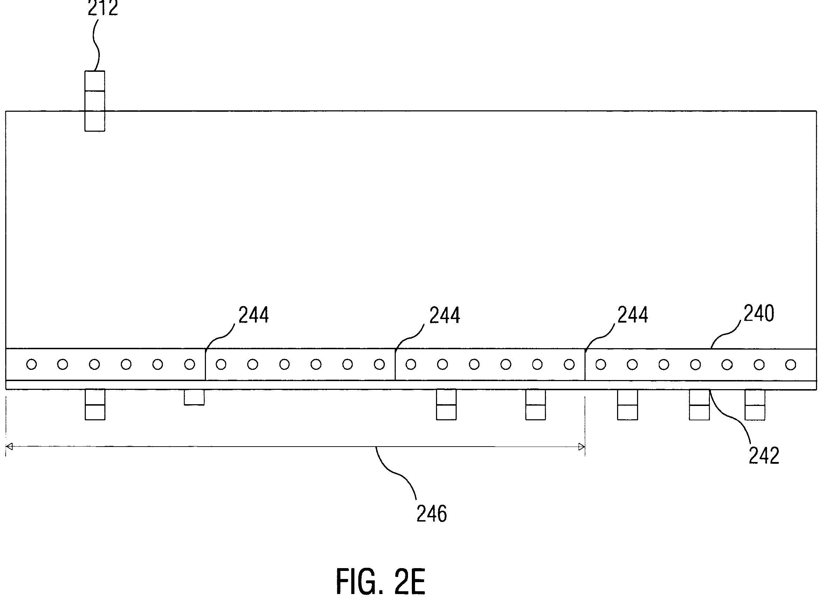

Am Ende des Trenn- und Einschweißvorgangs kann anschließend an den Bereich 246 mit bereits fertiggestellten Kehlnahtanschlüssen ein letzter Kehlnahtanschluss 242 zwischen einem letzten Längsflanschteil 240 und der Schale erzeugt werden und Querverbindungen 244 zwischen den Längsflanschteilen geschweißt werden, sodass die Längsflanschteile der jeweiligen Turmsektion untereinander verschweißt sind, wie es in Fig. 2e gezeigt ist. Die Querverbindungen 244 können alternativ auch bereits jeweils nach Einschweißen des zweiten und darauf folgender Längsflanschteile erfolgen. Beispielsweise können spätestens nach dem Fertigstellen des Längsflansches Knaggen für eine weitere gewünschte Längstrennlinie aufgeschweißt werden. Danach kann die Sektion um 180° (oder einen anderen Winkel bei einer Turmsektion mit mehr als zwei Teilsektionen) gedreht werden und der beschriebene Prozess für ein oder mehrere weitere gewünschte Längstrennlinien wiederholt werden. Während des Trenn- und Einschweißvorgangs entlang der weiteren gewünschten Längstrennlinie können die Hilfsbrückenstrukturen (z.B. Knaggen) auf der gegenüberliegenden Seite abgeschlagen oder entfernt werden.

Weitere Einzelheiten und optionale Aspekte des in den Fig. 2a-2e gezeigten Verfahrens sind in Verbindung mit dem vorgeschlagenen Konzept oder einem oder mehreren der zuvor oder im Folgenden beschriebenen Beispiele beschrieben.

Fig. 3a zeigt einen schematischen Querschnitt eines Teils einer mehrteiligen Turmsektion gemäß einem Ausführungsbeispiel. Die mehrteilige Turmsektion 300 umfasst eine erste Teilsektion, die ein erstes Schalensegment 310 einer Schale der mehrteiligen Turmsektion 300 und einen ersten an dem ersten Schalensegment befestigten Längsflanschteil 320 eines Längsflansches der ersten Teilsektion umfasst. Ferner umfasst die mehrteilige Turmsektion 300 eine zweite Teilsektion, die ein zweites Schalensegment 350 der Schale und einen ersten an dem zweiten Schalensegment befestigten Längsflanschteil 360 eines Längsflansches der zweiten Teilsektion umfasst. Der erste Längsflanschteil 320 des Längsflansches der ersten Teilsektion ist mit dem ersten Längsflanschteil 360 des Längsflansches der zweiten Teilsektion verbunden, sodass eine erste Kontaktfläche 322 des ersten Längsflanschteils des Längsflansches der ersten Teilsektion mit einer ersten Kontaktfläche 362 des ersten Längsflanschteils des Längsflansches der zweiten Teilsektion in Kontakt ist. Ferner weist der erste Längsflanschteil 320 des Längsflansches der ersten Teilsektion eine zweite, ebene Kontaktfläche 324 auf, die einen ersten Abschnitt und einen zweiten Abschnitt umfasst. Der erste Abschnitt der zweiten Kontaktfläche 324 erstreckt sich von einem Rand 312 des ersten Schalensegments bis zu einer Schweißnaht 304 zwischen dem erste Längsflanschteil 320 des Längsflansches der ersten Teilsektion und dem ersten Schalensegment 310. Ferner erstreckt sich der zweite Abschnitt der zweiten Kontaktfläche 324 von dem Rand 312 des ersten Schalensegments in Richtung des ersten Längsflanschteils 360 des Längsflansches der zweiten Teilsektion.

Durch die Verwendung eines zuvor beschriebenen Verfahrens zur Herstellung einer Teilsektion oder einer mehrteiligen Turmsektion kann an den Verbindungsstellen der Teilsektionen der mehrteiligen Turmsektion eine Struktur erhalten werden, bei der die Längsflanschteile eine dem Schalensegment zugewandte ebene Kontaktfläche aufweisen, die sich eben von einer Schweißnaht zwischen dem Längsflanschteil und dem Schalensegment über den Rand des Schalensegments hinaus erstreckt. Durch Trennen der Schale vor dem Befestigen der Längsflanschteile kann beispielsweise eine Beschädigung des Flansches während dem Trennen der Schale vermieden werden. Würde die Schale erst nach dem Befestigen der Längsflanschteile getrennt werden, würden im Bereich des Rands des Schalensegments nach dem Trennen Beschädigungen im Bereich der ebenen Kontaktfläche auftreten, wenn die beiden Längsflanschteile im Bereich der Längstrennlinie miteinander in Kontakt sind.

Der erste Längsflanschteil 320 des Längsflansches der ersten Teilsektion und der erste Längsflanschteil 360 des Längsflansches der zweiten Teilsektion können beispielsweise jeweils einstückig sein. Da die Kontaktflächen der Längsflanschteile miteinander in Kontakt sind, ist beispielsweise kein Abstandhalter oder Distanzstück zwischen den Längsflanschteilen angeordnet.

Die Längsflanschteile weisen beispielsweise mehrere Löcher auf, sodass die Längsflanschteile über Schraubverbindungen 302 miteinander verbunden werden können.

Zusätzlich kann der erste Längsflanschteil 320 des Längsflansches der ersten Teilsektion im zweiten Abschnitt der zweiten Kontaktfläche 324 durch eine weitere Schweißnaht mit dem Rand 312 des ersten Schalensegments 310 verbunden sein, wie es in Fig. 3a gezeigt ist. Dadurch kann beispielsweise Spaltkorrosion verhindert werden.

Beispielsweise sind die erste Kontaktfläche 322 des ersten Längsflanschteils 320 des Längsflansches der ersten Teilsektion und die zweite, ebene Kontaktfläche 324 des ersten Längsflanschteils 320 des Längsflansches der ersten Teilsektion orthogonal zueinander.

Ferner kann der erste Längsflanschteil 360 des Längsflansches der zweiten Teilsektion eine zweite, ebene Kontaktfläche 364 aufweist, die einen ersten Abschnitt und einen zweiten Abschnitt aufweist. Der erste Abschnitt der zweiten Kontaktfläche 364 des ersten Längsflanschteils 360 des Längsflansches der zweiten Teilsektion kann sich von einem Rand 352 des zweiten Schalensegments 350 bis zu einer Schweißnaht 306 zwischen dem erste Längsflanschteil 360 des Längsflansches der zweiten Teilsektion und dem zweiten Schalensegment 350 erstrecken. Ferner kann sich der zweite Abschnitt der zweiten Kontaktfläche 364 des ersten Längsflanschteils 360 des Längsflansches der zweiten Teilsektion von dem Rand 352 des zweiten Schalensegments 350 in Richtung des ersten Längsflanschteils 320 des Längsflansches der ersten Teilsektion erstrecken. Zusätzlich kann die zweite, ebene Kontaktfläche 324 des ersten Längsflanschteils 320 des Längsflansches der ersten Teilsektion und die zweite, ebene Kontaktfläche 364 des ersten Längsflanschteils 360 des Längsflansches der zweiten Teilsektion in einer Ebene liegen. Ferner kann ein Abstand zwischen der zweiten Kontaktfläche 324 des ersten Längsflanschteils 320 des Längsflansches der ersten Teilsektion und der zweiten Kontaktfläche 364 des ersten Längsflanschteils 360 des Längsflansches der zweiten Teilsektion weniger als 50% (oder weniger als 30% oder weniger als 10%) eines Abstands zwischen dem Rand 312 des ersten Schalensegments 310 und dem Rand 352 des zweiten Schalensegments 350 sein. Beispielweise können die zweite Kontaktfläche 324 des ersten Längsflanschteils 320 des Längsflansches der ersten Teilsektion und die zweite Kontaktfläche 364 des ersten Längsflanschteils 360 des Längsflansches der zweiten Teilsektion auch direkt aneinander anschließen.

Weitere Einzelheiten und optionale Aspekte der mehrteiligen Turmsektion 300 sind in Verbindung mit dem vorgeschlagenen Konzept oder einem oder mehreren der zuvor oder im Folgenden beschriebenen Beispiele beschrieben.

Fig. 3b zeigt einen schematischen Querschnitt eines Teils einer mehrteiligen Turmsektion 370. Die mehrteilige Turmsektion 370 weist zumindest zwei Teilsektionen auf. Die zumindest zwei Teilsektionen umfassen je zumindest einen mit einem Schalensegment der jeweiligen Teilsektion verbundenen Längsflanschteil eines jeweiligen Längsflansches. Ein einstückiger Längsflanschteil 320 einer ersten Teilsektion der zumindest zwei Teilsektionen ist mit einem einstückigen Längsflanschteil 360 einer zweiten Teilsektion der zumindest zwei Teilsektionen direkt verbunden. Zwischen dem Schalensegment 310 der ersten Teilsektion und dem Schalensegment 350 der zweiten Teilsektion ist ein Spalt vorhanden. Ferner ist ein Spalt zwischen den den Schalensegmenten zugewandten Enden der beiden benachbarten, einstückigen Längsflanschteile vorhanden. Der Spalt zwischen den beiden benachbarten, einstückigen Längsflanschteilen ist größer oder gleich als der Spalt zwischen den Schalensegmenten der zumindest zwei Teilsektionen.

Zusätzlich kann beispielsweise an jeweils beiden Seiten der den Schalensegmenten zugewandten Enden der beiden benachbarten, einstückigen Längsflanschteile eine Schweißnaht zum Verbinden der Längsflanschteile mit den Schalensegmenten angeordnet sein. Durch das Schweißen der Gegenlage kann beispielsweise Spaltkorrosion verhindert werden. An den zugewandten Enden der Längsflanschteile kann optional eine Schweißnahtvorbereitung vorgesehen werden. Durch die Schweißnahtvorbereitung für das Schweißen der Gegenlage könnte auch für den Fall, dass der Trennschnitt außermittig ist und unmittelbar an einen der beiden Längsflansche angrenzt, die Gegenlage aufgrund der Schweißnahtvorbereitung noch geschweißt werden. Durch die Nut zwischen den beiden Längsflanschen an den den Schalensegmenten zugewandten Enden der Längsflanschteile kann eine Symmetrie der Außen- und Innenlage der Schweißnähte am Längsflansch erreicht werden, wodurch ein Kippen der Längsflansche und folglich Probleme beim Wiederzusammensetzen der Teilsektionen reduziert oder verhindert werden könnten.

Weitere Einzelheiten und optionale Aspekte der mehrteiligen Turmsektion 370 sind in Verbindung mit dem vorgeschlagenen Konzept oder einem oder mehreren der zuvor oder im Folgenden beschriebenen Beispiele beschrieben.

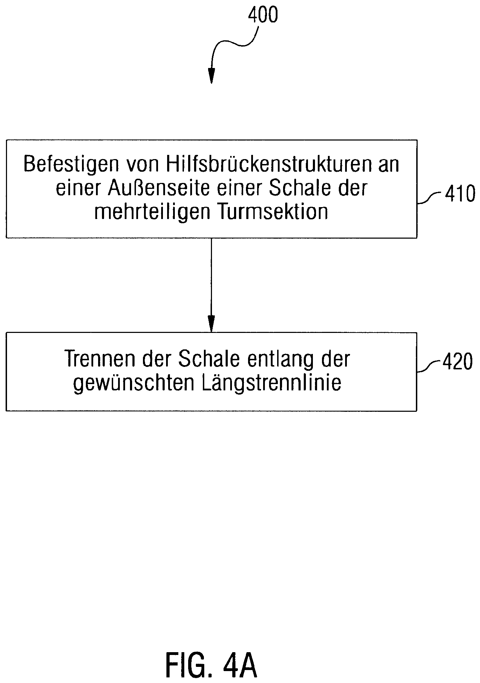

Fig. 4a zeigt ein Flussdiagramm eines Verfahrens zum Herstellen einer Teilsektion einer mehrteiligen Turmsektion eines Turms gemäß einem Ausführungsbeispiel. Das Verfahren 400 umfasst ein Befestigen 410 von Hilfsbrückenstrukturen an einer Schale der mehrteiligen Turmsektion. Jede Hilfsbrückenstruktur umfasst einen ersten Befestigungsabschnitt, der an einem Schalensegment einer ersten Teilsektion der mehrteiligen Turmsektion befestigt wird, und einen zweiten Befestigungsabschnitt, der an einem Schalensegment einer zweiten Teilsektion der mehrteiligen Turmsektion befestigt wird, sodass die Hilfsbrückenstruktur eine gewünschte Längstrennlinie der Schale zwischen dem Schalensegment der ersten Teilsektion und dem Schalensegment der zweiten Teilsektion überbrückt. Ferner umfasst das Verfahren 400 ein Trennen 420 der Schale entlang der gewünschten Längstrennlinie nach dem Befestigen der Hilfsbrückenstrukturen.

Durch das Anbringen von Hilfsbrückenstrukturen, die die gewünschte Längstrennlinie der Schale überbrücken, kann beispielsweise gewährleistet werden, dass sich beim Trennen der Schale die beiden dann voneinander getrennten Schalensegmente nicht aufeinander zu oder voneinander weg bewegen. Dadurch kann die Schale trotz des Trennschnittes in Form gehalten werden.

Die Hilfsbrückenstrukturen können an einer Außenseite der Schale befestigt werden, sodass das Trennen 420 der Schale von der Innenseite der Schale ohne Behinderung durch die Hilfsbrückenstrukturen erfolgen kann.

Die Hilfsbrückenstrukturen können z.B. Knaggen, Stahlbrücken oder Aluminiumbrücken sein. Die Hilfsbrückenstrukturen können beispielsweise durch Schweißen (z.B. teilweise oder vollständig umlaufende Kehlnaht) oder durch Schraubverbindungen mit an der Schale befestigten Bolzen (z.B. angeschweißt) an der Schale befestigt werden.

Ferner kann das Verfahren 400 ein Rotieren der Schale nach dem Befestigen der Hilfsbrückenstrukturen an der Außenseite der Schale und vor dem Trennen der Schale entlang der gewünschten Längstrennlinie umfassen, sodass die gewünschte Längstrennlinie von einer Lage zwischen 10 Uhr und 2 Uhr zu einer Lage zwischen 4 Uhr und 8 Uhr wechselt. Dadurch kann ermöglicht werden, dass die Hilfsstrukturen oben auf der Schale von außen befestigt werden können und danach die Schale von Innen unten an der Schale getrennt werden kann. Alternativ können die Hilfsbrückenstrukturen befestigt werden, während die gewünschte Längstrennlinie in einer Lage zwischen 4 Uhr und 5 Uhr oder zwischen 7 Uhr und 8 Uhr ist. Dadurch könnte beim Befestigen der Hilfsbrückenstrukturen beispielsweise auf eine Bühne verzichtet werden.

Weitere Einzelheiten und optionale Aspekte des Verfahrens 400 sind in Verbindung mit dem vorgeschlagenen Konzept oder einem oder mehreren der zuvor oder im Folgenden beschriebenen Beispiele beschrieben.

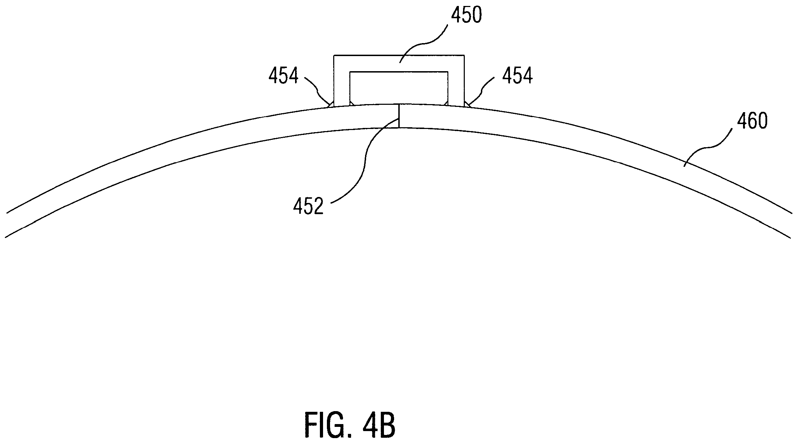

Fig. 4b zeigt einen schematischen Querschnitt eines Beispiels einer Hilfsbrückenstruktur in Form einer Knagge über einer markierten Trennlinie. In diesem Beispiel ist die Hilfsbrückenstruktur in Form einer Knagge 450 ausgebildet, die über umlaufende Kehlnähte (z.B. mit einer Kehlnahtdicke zwischen 5 und 7 mm) mit dem Turmblech 460 (Schale einer mehrteiligen Turmsektion) verbunden ist und die markierte spätere Trennlinie 452 überbrücken.

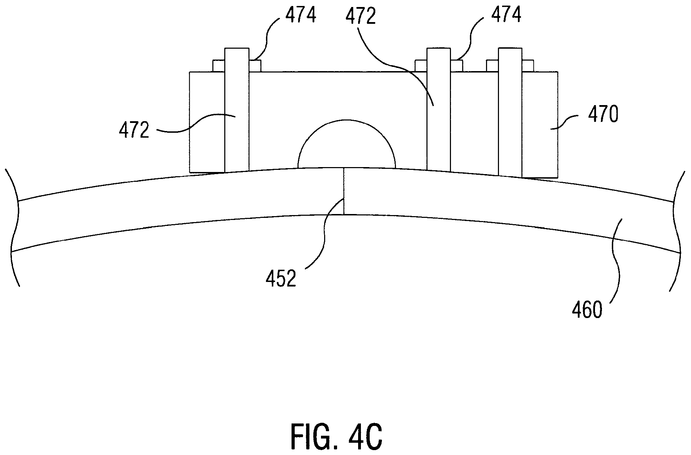

Fig. 4c zeigt einen schematischen Querschnitt eines weiteren Beispiels einer Hilfsbrückenstruktur in Form einer Alubrücke über einer markierten Trennlinie. In diesem Beispiel ist die Hilfsbrückenstruktur in Form einer Aluminiumbrücke 470 ausgebildet, die über an dem Turmblech 460 angeschweißten Bolzen 472 und Muttern 474 mit dem Turmblech 460 verbunden ist.

Einige Ausführungsbeispiele beziehen sich auf eine Windenergieanlage mit einem Turm mit zumindest einer mehrteiligen Turmsektion mit einer Teilsektion hergestellt nach einem der zuvor oder nachfolgend beschriebenen Beispiele.

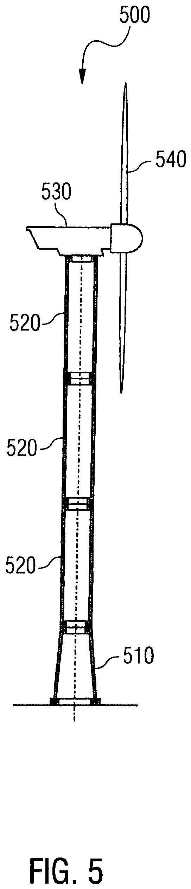

Fig. 5 zeigt einen schematischen Querschnitt einer Windenergieanlage 500 entsprechend einem Ausführungsbeispiel. Die Windenergieanlage 500 umfasst einen Turm und ein Maschinenhaus 530 mit angeschlossenem Rotor 540. Der Turm umfasst eine hohlkegelstumpfförmige untere Turmsektion 510 und drei hohlzylindrische obere Turmsektion 520. Zumindest die untere Turmsektion 510 umfasst zumindest zwei Teilsektionen, wie sie mit dem beschriebenen Konzept oder in Zusammenhang mit einem oder mehreren der vorhergehend oder nachfolgend beschriebenen Ausführungsbeispiele (z.B. Fig. 1-4c) beschrieben wurden.

Die Aspekte und Merkmale, die zusammen mit einem oder mehreren der vorher detaillierten Beispiele und Figuren beschrieben sind, können auch mit einem oder mehreren der anderen Beispiele kombiniert werden, um ein gleiches Merkmal des anderen Beispiels zu ersetzen oder um das Merkmal in das andere Beispiel zusätzlich einzuführen.

Durch die Beschreibung und Zeichnungen werden nur die Grundsätze der Offenbarung dargestellt. Weiterhin sollen alle hier aufgeführten Beispiele grundsätzlich ausdrücklich nur Lehrzwecken dienen, um den Leser beim Verständnis der Grundsätze der Offenbarung und der durch den (die) Erfinder beigetragenen Konzepte zur Weiterentwicklung der Technik zu unterstützen. Alle hiesigen Aussagen über Grundsätze, Aspekte und Beispiele der Offenbarung sowie konkrete Beispiele derselben deren Entsprechungen umfassen.

Ein als "Mittel zum..." Ausführen einer bestimmten Funktion bezeichneter Funktionsblock kann sich auf eine Schaltung beziehen, die ausgebildet ist zum Ausführen einer bestimmten Funktion. Somit kann ein "Mittel für etwas" als ein "Mittel ausgebildet für oder geeignet für etwas" implementiert sein, z. B. ein Bauelement oder eine Schaltung ausgebildet für oder geeignet für die jeweilige Aufgabe.

Ein Blockdiagramm kann zum Beispiel ein grobes Schaltdiagramm darstellen, das die Grundsätze der Offenbarung implementiert. Auf ähnliche Weise können ein Flussdiagramm, ein Ablaufdiagramm, ein Zustandsübergangsdiagramm, ein Pseudocode und dergleichen verschiedene Prozesse, Operationen oder Schritte repräsentieren, die zum Beispiel im Wesentlichen in computerlesbarem Medium dargestellt und so durch einen Computer oder Prozessor ausgeführt werden, ungeachtet dessen, ob ein solcher Computer oder Prozessor explizit gezeigt ist. In der Beschreibung oder in den Patentansprüchen offenbarte Verfahren können durch ein Bauelement implementiert werden, das ein Mittel zum Ausführen eines jeden der jeweiligen Schritte dieser Verfahren aufweist.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht austauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

## Patentansprüche

1. Ein Verfahren (100) zum Herstellen einer Teilsektion einer mehrteiligen Turmsektion eines Turms, wobei das Verfahren umfasst:
ein Trennen (110) einer Schale der mehrteiligen Turmsektion entlang eines ersten Abschnitts einer gewünschten Längstrennlinie der Schale;
ein Befestigen (120) eines ersten Längsflanschteils eines Längsflansches einer ersten Teilsektion der mehrteiligen Turmsektion an einem der ersten Teilsektion zugehörigen Schalensegment der Schale entlang des ersten Abschnitts der gewünschten Längstrennlinie nach dem Trennen (110) der Schale entlang des ersten Abschnitts der gewünschten Längstrennlinie;
ein Trennen (130) der Schale entlang eines zweiten Abschnitts der gewünschten Längstrennlinie während oder nach dem Befestigen (120) des ersten Längsflanschteils des Längsflansches der ersten Teilsektion; und
Befestigen von Hilfsbrückenstrukturen an einer Außenseite der Schale vor dem Trennen (110) der Schale entlang des ersten Abschnitts der gewünschten Längstrennlinie, wobei jede Hilfsbrückenstruktur einen ersten Befestigungsabschnitt aufweist, der an dem Schalensegment der ersten Teilsektion befestigt wird, und einen zweiten Befestigungsabschnitt aufweist, der an einem Schalensegment der zweiten Teilsektion befestigt wird, sodass die Hilfsbrückenstruktur die gewünschte Längstrennlinie überbrückt.

2. Das Verfahren gemäß Anspruch 1, wobei die Schale während des Trennens (110, 130) entlang der gewünschten Trennlinie liegend angeordnet ist, wobei das Trennen (110, 130) entlang der gewünschten Trennlinie von einer Innenseite der Schale erfolgt.

3. Das Verfahren gemäß einem der vorhergehenden Ansprüche, wobei das Trennen (110, 130) entlang der gewünschten Trennlinie durch einen Brenn- oder Schmelzschnitt erfolgt.

4. Das Verfahren gemäß einem der vorhergehenden Ansprüche, ferner umfassend ein Aufsetzen einer Trennvorrichtung auf eine Innenseite der Schale, wobei das Trennen (110, 130) entlang der gewünschten Trennlinie durch die Trennvorrichtung erfolgt.

5. Das Verfahren gemäß Anspruch 4, ferner umfassend ein Befestigen einer Führung für die Trennvorrichtung auf der Innenseite der Schale, wobei die Trennvorrichtung während des Trennens (110, 130) entlang der gewünschten Trennlinie mit der Führung gekoppelt ist.

6. Das Verfahren gemäß einem der vorhergehenden Ansprüche, ferner umfassend:
ein Befestigen eines ersten Längsflanschteils eines Längsflansches einer zweiten Teilsektion der mehrteiligen Turmsektion an einem der zweiten Teilsektion zugehörigen Schalensegment der Schale entlang des ersten Abschnitts der gewünschten Längstrennlinie nach dem Trennen (110) der Schale entlang des ersten Abschnitts der gewünschten Längstrennlinie; und
ein Verbinden des ersten Längsflanschteils des Längsflansches der ersten Teilsektion mit dem ersten Längsflanschteil des Längsflansches der zweiten Teilsektion bevor die Schale entlang der gesamten gewünschten Längstrennlinie getrennt ist.

7. Das Verfahren gemäß einem der vorhergehenden Ansprüche, ferner umfassend:
ein Befestigen eines zweiten Längsflanschteils des Längsflansches der ersten Teilsektion an dem der ersten Teilsektion zugehörigen Schalensegment entlang des zweiten Abschnitts der gewünschten Längstrennlinie nach dem Trennen (130) der Schale entlang des zweiten Abschnitts der gewünschten Längstrennlinie; und
ein Trennen der Schale entlang eines dritten Abschnitts der gewünschten Längstrennlinie während oder nach dem Befestigen des zweiten Längsflanschteils des Längsflansches der ersten Teilsektion.

8. Das Verfahren gemäß Anspruch 7, ferner umfassend ein Verbinden eines Endes des ersten Längsflanschteils des Längsflansches der ersten Teilsektion mit einem Ende des zweiten Längsflanschteils des Längsflansches der ersten Teilsektion.

9. Ein Verfahren (400) zum Herstellen einer Teilsektion einer mehrteiligen Turmsektion eines Turms, wobei das Verfahren umfasst:
ein Befestigen (410) von Hilfsbrückenstrukturen an einer Schale der mehrteiligen Turmsektion, wobei jede Hilfsbrückenstruktur einen ersten Befestigungsabschnitt aufweist, der an einem Schalensegment einer ersten Teilsektion der mehrteiligen Turmsektion befestigt wird, und einen zweiten Befestigungsabschnitt aufweist, der an einem Schalensegment einer zweiten Teilsektion der mehrteiligen Turmsektion befestigt wird, sodass die Hilfsbrückenstruktur eine gewünschte Längstrennlinie der Schale zwischen dem Schalensegment der ersten Teilsektion und dem Schalensegment der zweiten Teilsektion überbrückt;
Trennen (420) der Schale entlang der gewünschten Längstrennlinie nach dem Befestigen der Hilfsbrückenstrukturen; und
Befestigen (120) eines Längsflansches der ersten Teilsektion der mehrteiligen Turmsektion an dem der ersten Teilsektion zugehörigen Schalensegment der Schale entlang der gewünschten Längstrennlinie nach dem Trennen (110) der Schale entlang der gewünschten Längstrennlinie.

10. Eine mehrteilige Turmsektion (300) für einen Turm, wobei die mehrteilige Turmsektion (300) umfasst:
eine erste Teilsektion, die ein erstes Schalensegment (310) einer Schale der mehrteiligen Turmsektion (300) und einen ersten an dem ersten Schalensegment (310) befestigten Längsflanschteil (320) eines Längsflansches der ersten Teilsektion umfasst; und
eine zweite Teilsektion, die ein zweites Schalensegment (350) der Schale und einen ersten an dem zweiten Schalensegment (350) befestigten Längsflanschteil (360) eines Längsflansches der zweiten Teilsektion umfasst,
wobei der erste Längsflanschteil (320) des Längsflansches der ersten Teilsektion mit dem ersten Längsflanschteil (360) des Längsflansches der zweiten Teilsektion verbunden ist, sodass eine erste Kontaktfläche (322) des ersten Längsflanschteils (320) des Längsflansches der ersten Teilsektion mit einer ersten Kontaktfläche (362) des ersten Längsflanschteils (360) des Längsflansches der zweiten Teilsektion in Kontakt ist,
wobei der erste Längsflanschteil (320) des Längsflansches der ersten Teilsektion eine zweite, ebene Kontaktfläche (324) aufweist, die einen ersten Abschnitt und einen zweiten Abschnitt aufweist, wobei sich der erste Abschnitt der zweiten Kontaktfläche (324) von einem Rand (312) des ersten Schalensegments (310) bis zu einer Schweißnaht (304) zwischen dem erste Längsflanschteil (320) des Längsflansches der ersten Teilsektion und dem ersten Schalensegment (310) erstreckt, wobei sich der zweite Abschnitt der zweiten Kontaktfläche (324) von dem Rand (312) des ersten Schalensegments (310) in Richtung des ersten Längsflanschteils (360) des Längsflansches der zweiten Teilsektion erstreckt.

11. Die mehrteilige Turmsektion gemäß Anspruch 10, wobei der erste Längsflanschteil (320) des Längsflansches der ersten Teilsektion und der erste Längsflanschteil (360) des Längsflansches der zweiten Teilsektion jeweils einstückig sind.

12. Die mehrteilige Turmsektion gemäß Anspruch 10 oder 11, wobei die erste Kontaktfläche (322) des ersten Längsflanschteils (320) des Längsflansches der ersten Teilsektion und die zweite, ebene Kontaktfläche (324) des ersten Längsflanschteils (320) des Längsflansches der ersten Teilsektion orthogonal zueinander sind.

13. Die mehrteilige Turmsektion gemäß Anspruch 10, 11 oder 12, wobei der erste Längsflanschteil (360) des Längsflansches der zweiten Teilsektion eine zweite, ebene Kontaktfläche (364) aufweist, die einen ersten Abschnitt und einen zweiten Abschnitt aufweist, wobei sich der erste Abschnitt der zweiten Kontaktfläche (364) des ersten Längsflanschteils (360) des Längsflansches der zweiten Teilsektion von einem Rand (352) des zweiten Schalensegments (350) bis zu einer Schweißnaht (306) zwischen dem erste Längsflanschteil (360) des Längsflansches der zweiten Teilsektion und dem zweiten Schalensegment (350) erstreckt, wobei sich der zweite Abschnitt der zweiten Kontaktfläche (364) des ersten Längsflanschteils (360) des Längsflansches der zweiten Teilsektion von dem Rand (352) des zweiten Schalensegments (350) in Richtung des ersten Längsflanschteils (320) des Längsflansches der ersten Teilsektion erstreckt,
wobei die zweite, ebene Kontaktfläche (324) des ersten Längsflanschteils (320) des Längsflansches der ersten Teilsektion und die zweite, ebene Kontaktfläche (364) des ersten Längsflanschteils (360) des Längsflansches der zweiten Teilsektion in einer Ebene liegen.

14. Die mehrteilige Turmsektion gemäß Anspruch 13, wobei ein Abstand zwischen der zweiten Kontaktfläche (324) des ersten Längsflanschteils (320) des Längsflansches der ersten Teilsektion und der zweiten Kontaktfläche (364) des ersten Längsflanschteils (360) des Längsflansches der zweiten Teilsektion weniger als 50% eines Abstands zwischen dem Rand (312) des ersten Schalensegments (310) und dem Rand (352) des zweiten Schalensegments (350) ist.

## Claims

1. A method (100) for producing a partial section of a multi-part tower section of a tower, the method comprising:
separating (110) a shell of the multi-part tower section along a first portion of a desired longitudinal separation line of the shell;
mounting (120) a first longitudinal flange part of a longitudinal flange of a first partial section of the multi-part tower section to a shell segment of the shell associated with the first partial section along the first portion of the desired longitudinal separation line after separating (110) the shell along the first portion of the desired longitudinal separation line;
separating (130) the shell along a second portion of the desired longitudinal separation line during or after mounting (120) the first longitudinal flange part of the longitudinal flange of the first partial section; and
mounting auxiliary bridge structures to an exterior of the shell prior to separating (110) the shell along the first portion of the desired longitudinal separation line, each auxiliary bridge structure having a first mounting portion mounted to the shell segment of the first partial section and a second mounting portion mounted to a shell segment of the second partial section such that the auxiliary bridge structure bridges the desired longitudinal separation line.

2. The method of claim 1, wherein the shell is arranged horizontally along the desired separation line during separating (110, 130), wherein separating (110, 130) is performed along the desired separation line from an inner side of the shell.

3. The method of any one of the preceding claims, wherein separating (110, 130) is performed along the desired separation line by a flame or fusion cut.

4. The method of any one of the preceding claims, further comprising placing a separating device on an inner side of the shell, wherein separating (110, 130) is performed along the desired separation line by the separating device.

5. The method of claim 4, further comprising mounting a guide for the separating device to the inner side of the shell, wherein the separating device is coupled to the guide during separating (110, 130) along the desired separation line.

6. The method of any one of the preceding claims, further comprising:
mounting a first longitudinal flange part of a longitudinal flange of a second partial section of the multi-part tower section to a shell segment of the shell associated with the second partial section along the first portion of the desired longitudinal separation line after separating (110) the shell along the first portion of the desired longitudinal separation line; and
connecting the first longitudinal flange part of the longitudinal flange of the first partial section to the first longitudinal flange part of the longitudinal flange of the second partial section before the shell is separated along the entire desired longitudinal separation line.

7. The method of any one of the preceding claims, further comprising:
mounting a second longitudinal flange part of the longitudinal flange of the first partial section to the shell segment associated with the first partial section along the second portion of the desired longitudinal separation line after separating (130) the shell along the second portion of the desired longitudinal separation line; and
separating the shell along a third portion of the desired longitudinal separation line during or after mounting the second longitudinal flange part of the longitudinal flange of the first partial section.

8. The method of claim 7, further comprising connecting an end of the first longitudinal flange part of the longitudinal flange of the first partial section to an end of the second longitudinal flange part of the longitudinal flange of the first partial section.

9. A method (400) for producing a partial section of a multi-part tower section of a tower, the method comprising:
mounting (410) auxiliary bridge structures to a shell of the multi-part tower section, each auxiliary bridge structure having a first mounting portion mounted to a shell segment of a first partial section of the multi-part tower section and a second mounting portion mounted to a shell segment of a second partial section of the multi-part tower section such that the auxiliary bridge structure bridges a desired longitudinal separation line of the shell between the shell segment of the first partial section and the shell segment of the second partial section;
separating (420) the shell along the desired longitudinal separation line after mounting the auxiliary bridge structures; and
mounting (120) a first longitudinal flange of the first partial section of the multi-part tower section to the shell segment of the shell associated with the first partial section along the desired longitudinal separation line after separating (110) the shell along the desired longitudinal separation line.

10. A multi-part tower section (300) for a tower, the multi-part tower section (300) comprising:
a first partial section comprising a first shell segment (310) of a shell of the multi-part tower section (300) and a first longitudinal flange part (320) of a longitudinal flange of the first partial section mounted to the first shell segment (310); and
a second partial section comprising a second shell segment (350) of the shell and a first longitudinal flange part (360) of a longitudinal flange of the second partial section mounted to the second shell segment (350),
wherein the first longitudinal flange part (320) of the longitudinal flange of the first partial section is connected to the first longitudinal flange part (360) of the longitudinal flange of the second partial section such that a first contact surface (322) of the first longitudinal flange part (320) of the longitudinal flange of the first partial section is in contact with a first contact surface (362) of the first longitudinal flange part (360) of the longitudinal flange of the second partial section,
wherein the first longitudinal flange part (320) of the longitudinal flange of the first partial section comprises a second planar contact surface (324) having a first portion and a second portion, wherein the first portion of the second contact surface (324) extends from an edge (312) of the first shell segment (310) to a welding seam (304) between the first longitudinal flange part (320) of the longitudinal flange of the first partial section and the first shell segment (310), wherein the second portion of the second contact surface (324) extends from the edge (312) of the first shell segment (310) toward the first longitudinal flange part (360) of the longitudinal flange of the second partial section.

11. The multi-part tower section of claim 10, wherein the first longitudinal flange part (320) of the longitudinal flange of the first partial section and the first longitudinal flange part (360) of the longitudinal flange of the second partial section are each integral.

12. The multi-part tower section of claim 10 or 11, wherein the first contact surface (322) of the first longitudinal flange part (320) of the longitudinal flange of the first partial section and the second planar contact surface (324) of the first longitudinal flange part (320) of the longitudinal flange of the first partial section are orthogonal to each other.

13. The multi-part tower section of claim 10, 11 or 12, wherein the first longitudinal flange part (360) of the longitudinal flange of the second partial section comprises a second planar contact surface (364) having a first portion and a second portion, wherein the first portion of the second contact surface (364) of the first longitudinal flange part (360) of the longitudinal flange of the second partial section extends from an edge (352) of the second shell segment (350) to a welding seam (306) between the first longitudinal flange part (360) of the longitudinal flange of the second partial section and the second shell segment (350), wherein the second portion of the second contact surface (364) of the first longitudinal flange part (360) of the longitudinal flange of the second partial section extends from the edge (352) of the second shell segment (350) toward the first longitudinal flange part (320) of the longitudinal flange of the first partial section,
wherein the second planar contact surface (324) of the first longitudinal flange part (320) of the longitudinal flange of the first partial section and the second planar contact surface (364) of the first longitudinal flange part (360) of the longitudinal flange of the second partial section lie in one plane.

14. The multi-part tower section of claim 13, wherein a distance between the second contact surface (324) of the first longitudinal flange part (320) of the longitudinal flange of the first partial section and the second contact surface (364) of the first longitudinal flange part (360) of the longitudinal flange of the second partial section is less than 50% of a distance between the edge (312) of the first shell segment (310) and the edge (352) of the second shell segment (350).

## Revendications

1. Procédé (100) de fabrication d'une section partielle d'une section de tour en plusieurs parties d'une tour, le procédé comprenant le fait de :
séparer (410) une coque de la section de tour en plusieurs parties le long d'un premier tronçon d'une ligne de séparation longitudinale souhaitée de la coque ;
fixer (120) une première partie de bride longitudinale d'une bride longitudinale d'une première section partielle de la section de tour en plusieurs parties à un segment de coque de la coque associé à la première section partielle le long du premier tronçon de la ligne de séparation longitudinale souhaitée après la séparation (110) de la coque le long du premier tronçon de la ligne de séparation longitudinale souhaitée ;
séparer (130) la coque le long d'un deuxième tronçon de la ligne de séparation longitudinale souhaitée pendant ou après la fixation (120) de la première partie de bride longitudinale de la bride longitudinale de la première section partielle ; et
fixer de structures de pont auxiliaires à un côté extérieur de la coque avant la séparation (110) de la coque le long du premier tronçon de la ligne de séparation longitudinale souhaitée, chaque structure de pont auxiliaire ayant un premier tronçon de fixation fixé au segment de coque de la première section partielle et un deuxième tronçon de fixation fixé à un segment de coque de la deuxième section partielle, de sorte que la structure de pont auxiliaire enjambe la ligne de séparation longitudinale souhaitée.

2. Procédé selon la revendication 1, dans lequel la coque est disposée horizontalement le long de la ligne de séparation souhaitée pendant la séparation (110, 130), dans lequel la séparation (110, 130) le long de la ligne de séparation souhaitée est effectuée depuis un côté intérieur de la coque.

3. Procédé selon l'une des revendications précédentes, dans lequel la séparation (110, 130) le long de la ligne de séparation souhaitée est réalisée par une découpe au chalumeau ou par fusion.

4. Procédé selon l'une des revendications précédentes, comprenant en outre une mise en place d'un dispositif de séparation sur un côté intérieur de la coque, la séparation (110, 130) le long de la ligne de séparation souhaitée étant réalisée par le dispositif de séparation.

5. Procédé selon la revendication 4, comprenant en outre le fait de fixer un guide pour le dispositif de séparation sur le côté intérieur de la coque, le dispositif de séparation étant couplé au guide pendant la séparation (110, 130) le long de la ligne de séparation souhaitée.

6. Procédé selon l'une des revendications précédentes, comprenant en outre le fait de :
fixer une première partie de bride longitudinale d'une bride longitudinale d'une deuxième section partielle de la section de tour en plusieurs parties à un segment de coque de la coque associé à la deuxième section partielle le long du premier tronçon de la ligne de séparation longitudinale souhaitée après la séparation (110) de la coque le long du premier tronçon de la ligne de séparation longitudinale souhaitée ; et
connecter la première partie de bride longitudinale de la bride longitudinale de la première section partielle à la première partie de bride longitudinale de la bride longitudinale de la deuxième section partielle avant que la coque ne soit séparée le long de la totalité de la ligne de séparation longitudinale souhaitée.

7. Procédé selon l'une des revendications précédentes, comprenant en outre le fait de :
fixer une deuxième partie de bride longitudinale de la bride longitudinale de la première section partielle au segment de coque associé à la première section partielle le long du deuxième tronçon de la ligne de séparation longitudinale souhaitée après la séparation (130) de la coque le long du deuxième tronçon de la ligne de séparation longitudinale souhaitée ; et
séparer la coque le long d'un troisième tronçon de la ligne de séparation longitudinale souhaitée pendant ou après la fixation de la deuxième partie de bride longitudinale de la bride longitudinale de la première section partielle.

8. Procédé selon la revendication 7, comprenant en outre le fait de connecter une extrémité de la première partie de bride longitudinale de la bride longitudinale de la première section partielle à une extrémité de la deuxième partie de bride longitudinale de la bride longitudinale de la première section partielle.

9. Procédé (400) de fabrication d'une section partielle d'une section de tour en plusieurs parties d'une tour, le procédé comprenant le fait de :
fixer (410) de structures de pont auxiliaires à une coque de la section de tour en plusieurs parties, chaque structure de pont auxiliaire ayant un premier tronçon de fixation fixé à un segment de coque d'une première section partielle de la section de tour en plusieurs parties et un deuxième tronçon de fixation fixé à un segment de coque d'une deuxième section partielle de la section de tour en plusieurs parties, de sorte que la structure de pont auxiliaire enjambe une ligne de séparation longitudinale souhaitée de la coque entre le segment de coque de la première section partielle et le segment de coque de la deuxième section partielle ;
séparer (420) la coque le long de la ligne de séparation longitudinale souhaitée après la fixation des structures de pont auxiliaires ; et
fixer (120) une bride longitudinale de la première section partielle de la section de tour en plusieurs parties au segment de coque de la coque associé à la première section partielle le long de la ligne de séparation longitudinale souhaitée après la séparation (110) de la coque le long de la ligne de séparation longitudinale souhaitée.

10. Section de tour en plusieurs parties (300) pour une tour, la section de tour en plusieurs parties (300) comprenant :
une première section partielle comprenant un premier segment de coque (310) d'une coque de la section de tour en plusieurs parties (300) et une première partie de bride longitudinale (320), fixée au premier segment de coque (310), d'une bride longitudinale de la première section partielle ; et
une deuxième section partielle comprenant un deuxième segment de coque (350) de la coque et une première partie de bride longitudinale (360), fixée au deuxième segment de coque (350), d'une bride longitudinale de la deuxième section partielle,
dans lequel la première partie de bride longitudinale (320) de la bride longitudinale de la première section partielle est connectée à la première partie de bride longitudinale (360) de la bride longitudinale de la deuxième section partielle, de sorte qu'une première surface de contact (322) de la première partie de bride longitudinale (320) de la bride longitudinale de la première section partielle est en contact avec une première surface de contact (362) de la première partie de bride longitudinale (360) de la bride longitudinale de la deuxième section partielle,
dans lequel la première partie de bride longitudinale (320) de la bride longitudinale de la première section partielle comprend une deuxième surface de contact plane (324) ayant un premier tronçon et un deuxième tronçon, le premier tronçon de la deuxième surface de contact (324) s'étendant depuis un bord (312) du premier segment de coque (310) jusqu'à une ligne de soudage (304) entre la première partie de bride longitudinale (320) de la bride longitudinale de la première section partielle et le premier segment de coque (310), dans lequel le deuxième tronçon de la deuxième surface de contact (324) s'étend depuis le bord (312) du premier segment de coque (310) vers la première partie de bride longitudinale (360) de la bride longitudinale de la deuxième section partielle.

11. Section de tour en plusieurs parties selon la revendication 10, dans lequel la première partie de bride longitudinale (320) de la bride longitudinale de la première section partielle et la première partie de bride longitudinale (360) de la bride longitudinale de la deuxième section partielle sont chacune d'une seule pièce.

12. Section de tour en plusieurs parties selon la revendication 10 ou 11, dans lequel la première surface de contact (322) de la première partie de bride longitudinale (320) de la bride longitudinale de la première section partielle et la deuxième surface de contact plane (324) de la première partie de bride longitudinale (320) de la bride longitudinale de la première section partielle sont orthogonales entre elles.

13. Section de tour en plusieurs parties selon la revendication 10, 11 ou 12, dans lequel la première partie de bride longitudinale (360) de la bride longitudinale de la deuxième section partielle comprend une deuxième surface de contact plane (364) ayant un premier tronçon et un deuxième tronçon, dans lequel le premier tronçon de la deuxième surface de contact (364) de la première partie de bride longitudinale (360) de la bride longitudinale de la deuxième section partielle s'étend depuis un bord (352) du deuxième segment de coque (350) jusqu'à une ligne de soudage (306) entre la première partie de bride longitudinale (360) de la bride longitudinale de la deuxième section partielle et le deuxième segment de coque (350), dans lequel le deuxième tronçon de la deuxième surface de contact (364) de la première partie de bride longitudinale (360) de la bride longitudinale de la deuxième section partielle s'étend depuis le bord (352) du deuxième segment de coque (350) vers la première partie de bride longitudinale (320) de la bride longitudinale de la première section partielle,
dans lequel la deuxième surface de contact plane (324) de la première partie de bride longitudinale (320) de la bride longitudinale de la première section partielle et la deuxième surface de contact plane (364) de la première partie de bride longitudinale (360) de la bride longitudinale de la deuxième section partielle se situent dans un plan.

14. Section de tour en plusieurs parties selon la revendication 13, dans lequel une distance entre la deuxième surface de contact (324) de la première partie de bride longitudinale (320) de la bride longitudinale de la première section partielle et la deuxième surface de contact (364) de la première partie de bride longitudinale (360) de la bride longitudinale de la deuxième section partielle est inférieure à 50% d'une distance entre le bord (312) du premier segment de coque (310) et le bord (352) du deuxième segment de coque (350).
